# FASCICULE DE BREVET EUROPEEN

(11) **EP 2 608 330 B1**
(45) Date de publication et mention de la délivrance du brevet: **04.03.2015**
(21) Numéro de dépôt: 12306482.6
(22) Date de dépôt: 29.11.2012
(51) Int. Cl.: H02B 1/56, H02B 11/04

(54) **Ventilation pour appareil de déconnexion électrique**
Lüftung für einen Trennschalter
Ventilation for an electric disconnection apparatus

(30) Priorité: 19.12.2011 FR 1161922
(43) Date de publication de la demande: 26.06.2013
(73) Titulaire: Schneider Electric Industries SAS, 92500 Rueil-Malmaison (FR)
(72) Inventeur: Pillon, Eric, 38050 GRENOBLE Cedex 09 (FR)
(74) Mandataire: Péru, Laurence

(56) Documents cités:
- EP-A1- 1 906 503
- DE-A1- 1 440 873

## Description

### DOMAINE TECHNIQUE

La présente invention concerne un dispositif de ventilation pour un appareil de déconnexion électrique, tel qu'un disjoncteur moyenne tension.

### ÉTAT DE LA TECHNIQUE ANTÉRIEURE

Dans un réseau de distribution électrique, il est nécessaire de pouvoir couper le courant en certains points, pour des raisons de maintenance, d'exploitation ou de protection. C'est pourquoi on utilise des appareils de déconnexion, ou coupure, électrique. Parmi ces appareils, on considère plus particulièrement les disjoncteurs moyenne tension (entre 1 kV et 52 kV environ), dont des exemples sont décrits dans FR 2 542 142 ou US 5 929 410.

Un tel disjoncteur est installé dans une armoire de coupure. A titre d'exemple, une armoire de coupure de type AIS (« *Air Insulated Switchgear* ») est décrite dans WO 96/23336.

Un courant nominal de 4000 Ampères peut exister au sein d'une telle armoire de coupure, plus particulièrement dans les bras du disjoncteur. Cela génère une dissipation d'énergie sous forme thermique qui oblige à prévoir un système de ventilation forcée. Le système de ventilation forcée crée un flux d'air qui permet d'évacuer l'air chaud.

Le système de ventilation forcée est généralement installé sur l'armoire de coupure, par exemple sur la face supérieure de sa structure. Un tel système de ventilation prévu sur la face supérieure de l'armoire de coupure est compliqué à installer du fait de la hauteur de cette armoire ; pour cette même raison, son bon fonctionnement est également plus compliqué à surveiller ; enfin, si une intervention par un opérateur est nécessaire, elle est elle aussi rendue plus compliquée en raison de la hauteur de l'armoire.

Le système de ventilation forcée peut également être prévu sur une face latérale de la structure de l'armoire de coupure. Or ces dispositions ne donnent pas entièrement satisfaction. En effet, ces systèmes de ventilation ne sont pas situés dans la zone la plus chaude, qui se trouve au niveau des bras du disjoncteur. L'efficacité de ces systèmes n'est donc pas optimale.

Une option décrite dans GB 453 298 consiste à propulser de l'air sur les bras de disjoncteur, mais la mise en place de ce flux d'air pose d'autres problèmes de conception pour éviter les amorçages et la pollution due à la propulsion.

DE 1440873 décrit un système de ventilation situé sur une barre électrique.

### EXPOSÉ DE L'INVENTION

L'invention vise à résoudre les problèmes de la technique antérieure en fournissant un dispositif de ventilation pour un appareil de déconnexion électrique comportant au moins un bras de raccordement embrochable, ledit dispositif comprenant une partie fixe de forme sensiblement annulaire et une partie mobile autour la partie fixe qui est destinée à créer un flux d'air lorsqu'elle est mise en mouvement, ladite partie fixe adaptée pour être solidarisée autour du bras de l'appareil de déconnexion électrique. Ainsi, le système de ventilation est installé dans la zone la plus chaude du disjoncteur. Son efficacité est donc optimale.

L'installation et la maintenance du système de ventilation selon l'invention sont simplifiées par rapport à la technique antérieure. En effet, le système de ventilation selon l'invention est facilement accessible par un opérateur.

Selon une caractéristique préférée de l'invention, le dispositif de ventilation comporte en outre un circuit d'alimentation électrique autonome. Ainsi, il n'y a pas de câblage, ce qui simplifie l'installation du dispositif, et surtout ne nuit pas à la tenue diélectrique de l'armoire de coupure, ce qui pourrait survenir avec des fils d'alimentation électrique qui seraient ajoutés dans l'armoire de coupure.

Selon une caractéristique préférée de l'invention, le circuit d'alimentation électrique comporte un transformateur dont le circuit primaire est apte à être alimenté par un courant circulant dans le bras du disjoncteur et dont le circuit secondaire génère en réponse un courant secondaire alimentant un moteur d'entraînement de la partie mobile. Le fait d'alimenter le système de ventilation à partir du courant traversant le bras du disjoncteur sur lequel il est installé permet de produire une ventilation proportionnelle à la chaleur générée, qui dépend directement de ce courant électrique. Il y a donc une parfaite adéquation entre le besoin de ventilation et le fonctionnement du système de ventilation selon l'invention.

Selon une caractéristique préférée de l'invention, la partie mobile est sensiblement en forme de roue avec pales de ventilation dont l'axe de rotation est l'axe du bras de l'appareil de déconnexion électrique lorsque la partie fixe est solidarisée autour du bras de l'appareil de déconnexion électrique. Cette forme de partie mobile est un bon compromis entre efficacité de ventilation et compacité du dispositif.

Selon une caractéristique préférée de l'invention, le dispositif de ventilation comporte une pièce d'adaptation destinée à être disposée entre la partie fixe et le bras de l'appareil de déconnexion électrique, lorsque la partie fixe est solidarisée autour du bras de l'appareil de déconnexion électrique. La pièce d'adaptation rend compatible les formes et dimensions respectives du bras et de la partie fixe du ventilateur. En outre, la pièce d'adaptation, notamment lorsqu'elle est de type anneau élastique, assure un bon maintien mécanique du dispositif de ventilation sur le bras.

L'invention concerne aussi un appareil de déconnexion électrique comportant au moins un bras, sur lequel est disposé un dispositif de ventilation tel que précédemment présenté. Cet appareil de déconnexion électrique peut notamment être un disjoncteur moyenne tension triphasé comportant deux rangées de trois bras chacune, avec un dispositif de ventilation sur chacun des bras.

L'invention concerne encore une armoire de coupure adaptée pour recevoir un appareil de déconnexion électrique comportant au moins un bras autour duquel est mis en place un dispositif de ventilation tel que précédemment présenté. Il peut notamment s'agir d'une armoire de coupure dans laquelle est installé un disjoncteur moyenne tension triphasé comportant deux rangées de trois bras chacune, un dispositif de ventilation tel que précédemment présenté étant disposé sur chacun des bras.

L'invention concerne aussi une armoire de coupure adapté pour recevoir un disjoncteur moyenne tension triphasé comportant deux rangées de trois bras chacune, dans laquelle un dispositif de ventilation tel que précédemment présenté est disposé sur chacun d'une pluralité de logements destinés à recevoir respectivement un bras du disjoncteur.

L'appareil de déconnexion électrique, le disjoncteur moyenne tension triphasé et l'armoire de coupure présentent des avantages analogues à ceux précédemment énumérés.

### BRÈVE DESCRIPTION DES DESSINS

D'autres caractéristiques et avantages apparaîtront à la lecture d'un mode de réalisation préféré donné à titre d'exemple non limitatif, décrit en référence aux figures dans lesquelles :
- la figure 1 représente une vue schématique en coupe d'une armoire de coupure équipée d'un disjoncteur ;
- la figure 2 représente une vue schématique partielle en coupe d'une armoire de coupure et d'un disjoncteur ;
- la figure 3 représente une vue schématique partielle en coupe longitudinale d'un bras de disjoncteur sur lequel est disposé le dispositif de ventilation selon l'invention ;
- la figure 4 représente une vue schématique partielle en coupe transversale d'un bras de disjoncteur sur lequel est disposé le dispositif de ventilation selon l'invention ;
- la figure 5 représente une vue schématique d'un mode de réalisation du circuit d'alimentation électrique du dispositif de ventilation selon l'invention ;
- la figure 6 représente une autre vue schématique partielle en coupe d'une armoire de coupure et d'un disjoncteur.

### EXPOSÉ DÉTAILLÉ DE MODES DE RÉALISATION PARTICULIERS

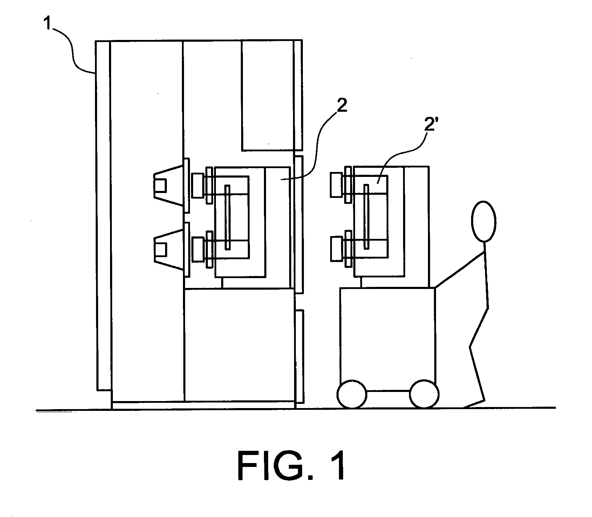

Selon un mode de réalisation représenté à la figure 1, une armoire de coupure 1 comporte un logement adapté pour recevoir un disjoncteur moyenne tension 2. Par exemple, un opérateur insère ou extrait le disjoncteur au moyen d'un chariot adapté. En figure 1 sont représentés deux disjoncteurs 2 et 2' : le disjoncteur 2 est en position insérée dans l'armoire de coupure 1, mais pas encore en position de fonctionnement ; il est prêt à être embroché. L'autre disjoncteur 2' est représenté sur un chariot à l'extérieur de l'armoire de coupure 1, en position de maintenance.

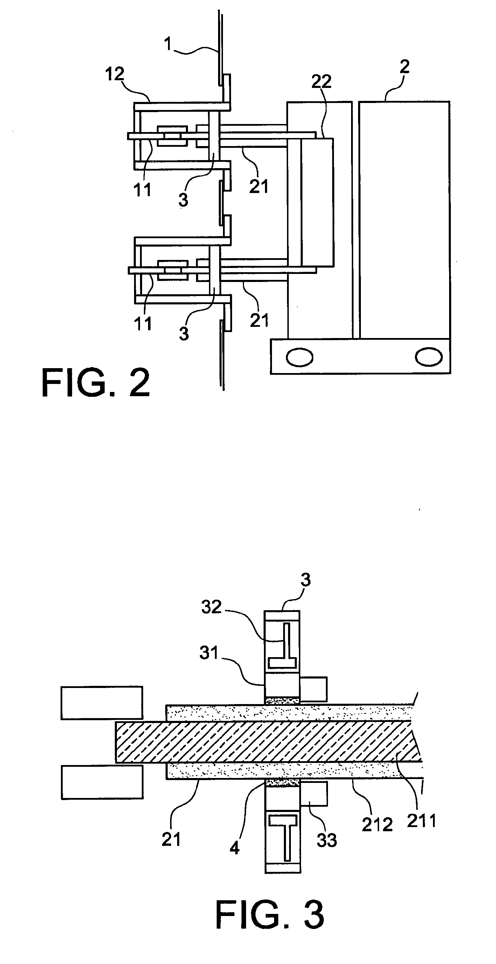

De manière connue, et comme représenté à la figure 2, le disjoncteur 2 comporte deux rangées de bras embrochables 21 qui sont connectés à un système de coupure 22. Chaque rangée de bras comporte un nombre de bras correspondant au nombre de phases, par exemple trois.

L'armoire de coupure 1 comporte des contacts électriques internes fixes 11. Lorsque le disjoncteur 2 est inséré dans l'armoire de coupure 1 et en position de fonctionnement, un contact électrique est établi entre les extrémités des bras 21 et les contacts internes 11 de l'armoire de coupure 1. Pour cela, les bras 21 sont embrochables dans des logements 12 laissant accès aux contacts fixes 11 de façon à établir une connexion électrique entre le contact fixe 11 et une partie de contact, de forme complémentaire, à l'extrémité du bras 21.

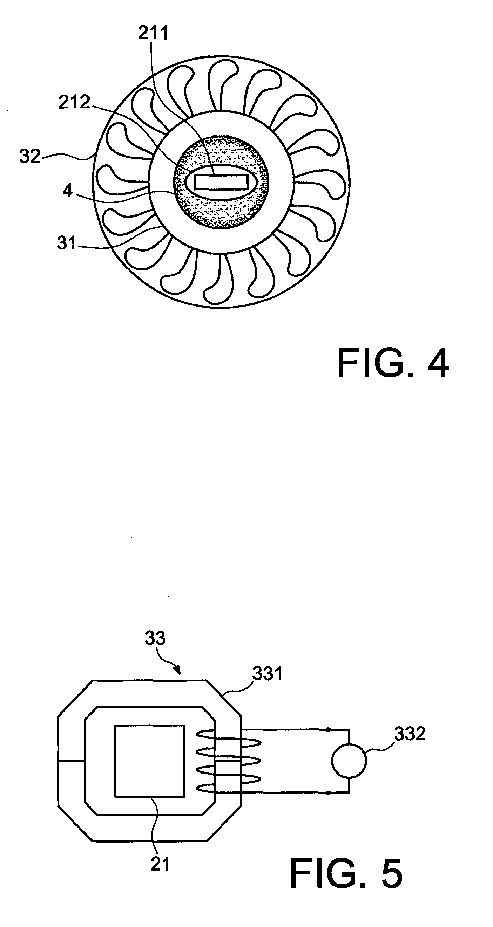

Comme représenté aux figures 3 et 4, les bras 21 du disjoncteur sont de forme longitudinale. Ils comportent un coeur 211 réalisé en un matériau conducteur, par exemple du cuivre. Le coeur 211 est recouvert par une gaine isolante 212, sauf à l'extrémité du bras destinée à entrer en contact avec le contact 11 de l'armoire de coupure 1. Dans le mode de réalisation illustré en figure 4, la section du conducteur 211 est rectangulaire et le bras est allongé. Dans d'autres modes de réalisation, le bras 21 ainsi que le conducteur 211 sont de forme cylindrique, sensiblement de révolution.

Selon l'invention, un ventilateur 3 est disposé sur au moins l'un des bras 21 du disjoncteur 2. De préférence, chaque bras d'une rangée reçoit un ventilateur. Il est encore possible d'équiper tous les bras du disjoncteur d'un ventilateur.

Le ventilateur 3 comporte une partie fixe 31, dont la forme est adaptée pour être fixée sur le bras 21. La partie fixe est en forme de bague circulaire et est insérée autour du bras 21, dans l'exemple représenté.

Pour permettre la solidarisation du ventilateur au bras 21, une pièce d'adaptation 4 peut être prévue, notamment dans le cas où la section du bras 21 ne correspond pas en forme ou en dimension à la partie fixe 31. Ce peut être notamment le cas si la section du bras 21 n'est pas circulaire. La pièce d'adaptation 4 est interposée entre la partie fixe 31 du ventilateur 3 et le bras 21. De préférence, la pièce d'adaptation 4 est un anneau élastique pour assurer un bon maintien mécanique du ventilateur 3 sur le bras 21.

Le ventilateur 3 comporte aussi une partie mobile 32 solidaire de la partie fixe 31 et destinée à créer un flux d'air le long du bras 21 lorsqu'elle est mise en mouvement. La partie mobile 32 est disposée autour de la partie fixe 31 et comprend des pales de ventilateur. La partie mobile 32 effectue donc un mouvement rotatif autour d'un axe central perpendiculaire à la bague 31. En d'autres termes, le mouvement rotatif de la partie mobile 32 est autour de l'axe du bras 21 lorsque le ventilateur est disposé sur celui-ci.

Le ventilateur 3 comporte un circuit d'alimentation électrique 33. De préférence, le circuit d'alimentation électrique du ventilateur est autonome.

Selon un mode de réalisation préféré représenté à la figure 5, le ventilateur 3 est alimenté lorsque un courant traverse le bras 21 sur lequel il est installé. En effet, c'est dans ce cas que de l'énergie est dissipée sous forme de chaleur autour du bras 21 et qu'une ventilation est la plus nécessaire. Pour cela, le circuit d'alimentation électrique comporte un transformateur dont le circuit primaire est apte à être alimenté par un courant circulant dans le bras 21 du disjoncteur 2 et dont le circuit secondaire génère en réponse un courant secondaire alimentant un moteur d'entraînement de la partie mobile. L'alimentation par courant induit du ventilateur présente plusieurs avantages : sa conception et son câblage sont simplifiés. En outre, il n'y a pas de détérioration de la tenue diélectrique de l'armoire de coupure, puisqu'il qu'il y a pas de fils d'alimentation électrique qui seraient disposés dans l'armoire.

Comme représenté à la figure 5, le circuit d'alimentation 33 comporte un circuit magnétique 331 en forme de bague, ou mâchoire, destiné à être disposé autour du bras 21. Le bras 21 constitue alors un circuit primaire pour le transformateur. Un circuit secondaire du transformateur est formé par un enroulement dans lequel se crée un courant induit, et relié à un moteur d'entraînement 332. Le moteur d'entraînement est ainsi alimenté lorsque qu'un courant circule dans le bras 21 et entraîne en réponse la partie mobile du ventilateur 3.

Selon une première variante de réalisation, le ventilateur est alimenté dès qu'un courant traverse le bras. Selon une seconde variante de réalisation, le ventilateur n'est déclenché qu'au dessus d'un seuil de courant ; dans ce cas, le courant est mesuré par le circuit d'alimentation, qui n'alimente le ventilateur qu'au dessus du seuil.

De préférence, le circuit secondaire du transformateur est protégé contre les surtensions et/ou contre les surintensités.

Un éclateur est prévu pour la protection contre les surtensions. Lorsque le circuit électrique s'ouvre, par exemple si un fil est coupé ou si l'enroulement du moteur est coupé, l'éclateur se soude et court-circuite ainsi le transformateur de courant. L'éclateur est adapté pour supporter le courant secondaire, permanent et transitoire, du transformateur.

La protection contre les surintensités est assurée par exemple par un dimensionnement approprié du transformateur. En effet, un courant transitoire d'amplitude très supérieure au courant nominal du moteur peut exister dans le circuit, par exemple lors d'un court-circuit.

Le circuit d'alimentation peut être intégré au ventilateur de manière à ne former qu'un seul module. Alternativement, le ventilateur et son alimentation peuvent être réalisés sous la forme de deux modules tous les deux fixés au bras.

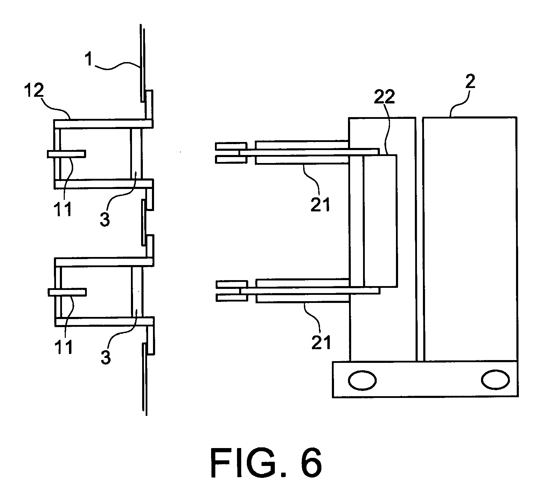

Selon une variante de réalisation représentée à la figure 6, le ventilateur n'est pas solidarisé au bras embrochable 21, mais au logement 12 du contact fixe 11 de l'armoire de coupure 1. La pièce d'adaptation 4 est alors adaptée pour permettre le passage du bras 21 pour qu'il soit embroché et que le contact électrique soit établi entre le contact 11 et l'extrémité du bras 21. Lorsque le bras 21 est embroché dans l'armoire de coupure, le ventilateur 3 est autour du bras, tout en étant solidarisé à l'armoire de coupure.

Mise à part cette différence de support de fixation, le ventilateur selon cette variante de réalisation présente les mêmes caractéristiques que celles précédemment détaillées.

Le dispositif de ventilation selon l'invention peut être utilisé en complément des dispositifs connus et décrits dans le préambule, ou à la place de ceux-ci. Du fait de sa compacité, le dispositif de ventilation selon l'invention peut être placé au plus près des points chauds, et ainsi avoir une grande efficacité.

Grâce à son autonomie et sa modularité, le dispositif de ventilation selon l'invention peut être ajouté sur les bras d'un disjoncteur existant, ou alternativement dans les logements 12 d'une armoire existante, ce qui ne modifie pas la ligne de fabrication des disjoncteurs, respectivement des armoires de coupure. Alternativement, le dispositif de ventilation selon l'invention peut être installé au cours de la fabrication d'un disjoncteur, respectivement d'une armoire de coupure. Il peut donc être proposé et géré comme une option.

## Revendications

1. Dispositif de ventilation pour un appareil de déconnexion électrique moyenne tension (2) comportant au moins un bras de raccordement embrochable (21), **caractérisé en ce qu'il** comprend :
- une partie fixe (31) de forme sensiblement annulaire adaptée pour être solidarisée autour du bras (21) de l'appareil de déconnexion électrique,
- une partie mobile (32) couplée autour de la partie fixe (31) et destinée à créer un flux d'air lorsqu'elle est mise en mouvement.

2. Dispositif de ventilation selon la revendication 1 comprenant en outre un circuit d'alimentation électrique autonome.

3. Dispositif de ventilation selon la revendication 2, dans lequel le circuit d'alimentation électrique (33) comporte un transformateur dont le circuit primaire est apte à être alimenté par un courant circulant dans le bras (21) du disjoncteur et dont le circuit secondaire génère en réponse un courant induit secondaire alimentant un moteur d'entraînement (332) de la partie mobile (32).

4. Dispositif de ventilation selon l'un quelconque des revendications 1 à 3, dans lequel la partie mobile (32) est sensiblement en forme de roue avec pales de ventilation, dont l'axe de rotation est l'axe du bras (21) de l'appareil de déconnexion électrique lorsque la partie fixe (31) est solidarisée autour du bras de l'appareil de déconnexion électrique.

5. Dispositif de ventilation selon l'une quelconque des revendications 1 à 4 comprenant une pièce d'adaptation (4) destinée à être disposée entre la partie fixe (31) et le bras (21) de l'appareil de déconnexion électrique, lorsque la partie fixe est solidarisée autour du bras de l'appareil de déconnexion électrique.

6. Appareil de déconnexion électrique (2) comportant au moins un bras, comprenant un dispositif de ventilation (3) selon l'une quelconque des revendications 1 à 5, disposé sur ledit bras.

7. Disjoncteur moyenne tension triphasé comportant deux rangées de trois bras chacune et un dispositif de ventilation (3) selon l'une quelconque des revendications 1 à 5 disposé sur chacun des bras.

8. Armoire de coupure adaptée pour recevoir un appareil de déconnexion électrique comportant au moins un bras, dans laquelle un dispositif de ventilation (3) selon l'une quelconque des revendications 1 à 5 est disposé autour dudit bras.

9. Armoire de coupure dans laquelle est installé un disjoncteur moyenne tension selon la revendication 7.

10. Armoire de coupure adaptée pour recevoir un disjoncteur moyenne tension triphasé comportant deux rangées de trois bras chacune, dans laquelle un dispositif de ventilation (3) selon l'une quelconque des revendications 1 à 5 est disposé sur chacun d'une pluralité de logements (12) destinés à recevoir respectivement un bras du disjoncteur.

## Patentansprüche

1. Lüftungseinrichtung für ein elektrisches Mittelspannungs-Schaltgerät (2) mit mindestens einem steckbaren Anschlussstück (21), **dadurch gekennzeichnet, dass** die Einrichtung
- ein feststehendes Teil (31), das annähernd ringförmig ausgebildet ist und dazu dient um das Anschlussstück (21) des elektrischen Schaltgeräts herum montiert zu werden, sowie
- ein um das feststehende Teil herum angeordnetes, bewegliches Teil (32) umfasst, das dazu dient, in Bewegung einen Luftstrom zu erzeugen.

2. Lüftungseinrichtung nach Anspruch 1, **dadurch gekennzeichnet, dass** sie eine unabhängige Stromversorgung umfasst.

3. Lüftungseinrichtung nach Anspruch 2, **dadurch gekennzeichnet, dass** die Stromversorgung (33) einen Transformator umfasst, dessen Primärkreis so ausgebildet ist, dass er durch einen über das Anschlussstück (21) des Leistungsschalters fließenden Strom gespeist wird, und in dessen Sekundärkreis als Folge davon ein Sekundärstrom induziert wird, der einen Motor (332) zum Antrieb des beweglichen Teils (33) speist.

4. Lüftungseinrichtung nach irgendeinem der Ansprüche 1 bis 3, bei der das bewegliche Teil (32) wesentlich in Form eines Rades mit Lüfterschaufeln ausgebildet ist, wobei nach Befestigung des feststehenden Teils (31) auf dem Anschlussstück des Schaltgeräts die Drehachse des Rades der Achse des Anschlussstücks (21) des Schaltgeräts entspricht.

5. Lüftungseinrichtung nach irgendeinem der Ansprüche 1 bis 4 mit einem Adapterteil (4), das dazu dient, bei der Befestigung des feststehenden Teils auf dem Anschlussstück des elektrischen Schaltgeräts zwischen das feststehende Teil (31) und das Anschlussstück (21) des elektrischen Schaltgeräts eingesetzt zu werden.

6. Elektrisches Schaltgerät (2) mit mindestens einem Anschlussstück, welches Schaltgerät eine auf dem genannten Anschlussstück montierte Lüftungseinrichtung (3) nach irgendeinem der Ansprüche 1 bis 5 umfasst.

7. Dreiphasen-Mittelspannungs-Schaltgerät, das zwei Reihen mit jeweils drei Anschlussstücken und eine auf jedem Anschlussstück montierte Lüftungseinrichtung (3) nach irgendeinem der Ansprüche 1 bis 5 umfasst.

8. Schaltanlage zur Installation eines elektrischen Schaltgeräts mit mindestens einem Anschlussstück, in der eine Lüftungseinrichtung (3) nach irgendeinem der Ansprüche 1 bis 5 auf dem genannten Anschlussstück montiert ist.

9. Schaltanlage, in der ein Mittelspannungs-Leistungsschalter nach Anspruch 7 installiert ist.

10. Schaltanlage zur Installation eines Dreiphasen-Mittelspannungs-Leistungsschalters, der zwei Reihen mit je drei Anschlussstücken umfasst, bei welcher Anlage eine Lüftungseinrichtung (3) nach irgendeinem der Ansprüche 1 bis 5 in jeder der mehrfach vorhandenen, zur Aufnahme jeweils eines Anschlussstücks des Leistungsschalters bestimmten Nischen (12) angeordnet ist.

## Claims

1. Ventilation device for a medium-voltage electric disconnection apparatus (2) comprising at least one plug-in connection arm (21), **characterized in that** it comprises:
- a fixed part (31) of substantially annular form designed to be secured around the arm (21) of the electric disconnection apparatus,
- a moving part (32) coupled around the fixed part (31) and intended to create a flow of air when it is set in motion.

2. Ventilation device according to Claim 1, further comprising a standalone electrical power supply circuit.

3. Ventilation device according to Claim 2, in which the electrical power supply circuit (33) comprises a transformer whose primary circuit is suitable for being powered by a current flowing in the arm (21) of the circuit breaker and whose secondary circuit generates in response an induced secondary current powering a drive motor (332) of the moving part (32).

4. Ventilation device according to any one of Claims 1 to 3, in which the moving part (32) is substantially in the form of a wheel with ventilation blades, whose axis of rotation is the axis of the arm (21) of the electric disconnection apparatus when the fixed part (31) is secured around the arm of the electric disconnection apparatus.

5. Ventilation device according to any one of Claims 1 to 4, comprising an adaptation part (4) intended to be positioned between the fixed part (31) and the arm (21) of the electric disconnection apparatus, when the fixed part is secured around the arm of the electric disconnection apparatus.

6. Electric disconnection apparatus (2) comprising at least one arm, comprising a ventilation device (3) according to any one of Claims 1 to 5, positioned on said arm.

7. Three-phase medium-voltage circuit breaker comprising two rows of three arms each and a ventilation device (3) according to any one of Claims 1 to 5 positioned on each of the arms.

8. Switching cabinet designed to receive an electric disconnection apparatus comprising at least one arm, in which a ventilation device (3) according to any one of Claims 1 to 5 is positioned around said arm.

9. Switching cabinet in which is installed a medium-voltage circuit breaker according to Claim 7.

10. Switching cabinet designed to receive a three-phase medium-voltage circuit breaker comprising two rows of three arms each, in which a ventilation device (3) according to any one of Claims 1 to 5 is positioned on each of a plurality of housings (12) intended to receive, respectively, an arm of the circuit breaker.
